# EUROPEAN PATENT APPLICATION

(11) **EP 4 840 680 A1**
(43) Date of publication of application: **18.11.2026**
(21) Application number: 25195273.5
(22) Date of filing: 12.08.2025
(51) Int. Cl.: B60L 53/35, B60L 53/16, B60L 53/18

(54) **HOLDING MECHANISM AND CHARGING SYSTEM**

(30) Priority: 13.05.2025 TW 114117861
(71) Applicant: Wistron Corp., New Taipei City 22181 (TW)
(72) Inventor: CHEN, Tsung Hsien, 22181 New Taipei City (TW); HSU, Po Yuan, 22181 New Taipei City (TW); SU, Chiacheng, 22181, New Taipei City (TW)
(74) Representative: Patentship Patentanwaltsgesellschaft mbH

(57) **Abstract**

A holding mechanism (100) is provided. The holding mechanism (100) includes a holder (110) and a connecting rod (120) connected to the holder (110). The holding mechanism (100) includes a connecting assembly (130) connected to the connecting rod (120). The holding mechanism (100) includes an extension assembly (140) connected to the connecting rod (120) via the connecting assembly (130) and including a fixed portion (141) and an extension portion (145) that are movable relative to the fixed portion (141). The holding mechanism (100) also includes a clip (160) disposed on the extension assembly (140), and the clip (160) is used to engage with the wire portion (60) of the electronic device (50). In this way, the wire (60) of the electronic device (50) can be stretched and rotated effortlessly, and the electronic device (50) can be automatically reset due to the configuration of the holder (110) and the connecting rod (120), thereby improving the convenience of using and storing the electronic device (50).

## Description

### TECHNICAL FIELD

The disclosure is related to a holding mechanism and a charging system, and in particular it is related to a holding mechanism and a charging system that include an extension assembly for engaging the electronic device.

### BACKGROUND

With the advancements being made in science and technology, there are more and more applications designed specifically for electric vehicles. However, there is still room for improvements in the existing charging systems, especially in terms of storage and convenience of use. Therefore, how to overcome the above problem in a cost-effective way is an urgent issue.

### BRIEF SUMMARY

The present disclosure provides a holding mechanism, which includes a holder and a connecting rod connected to the holder. The holding mechanism includes a connecting assembly connected to the connecting rod. The holding mechanism also includes an extension assembly connected to the connecting rod via the connecting assembly and including a fixed portion and an extension portion. The holder is suitable for driving the extension portion of the extension assembly to move relative to the fixed portion via the connecting rod and the connecting assembly.

The present disclosure provides a charging system. The charging system includes an electronic device, which includes a body, and a holding mechanism. The holding mechanism includes a holder movably disposed on the body. The holding mechanism includes a connecting rod pivotally connected to the body and connected to the holder. The holding mechanism includes a connecting assembly connected to the connecting rod. The holding mechanism includes an extending assembly disposed on the body and connected to the connecting rod via the connecting assembly. The extending assembly includes a fixed portion and an extension portion. The extension assembly is driven to move relative to the fixed portion by the holder via the connecting rod and the connecting assembly.

### BRIEF DESCRIPTION OF THE DRAWINGS

The disclosure may be more fully understood by reading the subsequent detailed description and examples with references made to the accompanying drawings, wherein:
FIG. 1 illustrates a perspective view of a charging system in the using state in accordance with some embodiments of the present disclosure;
FIG. 2 illustrates an exploded view of the charging system in accordance with some embodiments of the present disclosure;
FIG. 3 illustrates a cross-sectional view of the extension assembly in accordance with some embodiments of the present disclosure;
FIG. 4 illustrates a schematic view of the charging system in the using state in accordance with some embodiments of the present disclosure;
FIG. 5 illustrates a perspective view of the charging system in the stowed state in accordance with some embodiments of the present disclosure;
FIG. 6 illustrates a perspective view of the charging system in the using state in accordance with some embodiments of the present disclosure;
FIG. 7 illustrates an exploded view of the charging system in accordance with some embodiments of the present disclosure;
FIG. 8 illustrates a cross-sectional view of the extension assembly in accordance with some embodiments of the present disclosure;
FIG. 9 illustrates a schematic view of the charging system in the using state in accordance with some embodiments of the present disclosure; and
FIG. 10 illustrates a perspective view of the charging system in the stowed state in accordance with some embodiments of the present disclosure.

### DETAILED DESCRIPTION OF THE INVENTION

The holding mechanism of some embodiments of the present disclosure are described in the following description. However, it should be appreciated that the following detailed description of some embodiments of the disclosure provides various concepts of the present disclosure which may be performed in specific backgrounds that may vary widely. The specific embodiments disclosed are provided merely to clearly describe the usage of the present disclosure by some specific methods without limiting the scope of the present disclosure.

In addition, relative terms such as "down" or "bottom," "up" or "top" may be used in the following embodiments in order to describe the relationship between one element and another element in the figures. It should be appreciated that if the device shown in the figures is flipped upside-down, the element located on the "down" side may become the element located on the "up" side.

It should be understood that although the terms "first," "second," etc. may be used herein to describe various elements, materials and/or portions, these elements, materials and/or portions are not limited by the above terms. These terms merely serve to distinguish different elements, materials and/or portions. Therefore, a first element, material and/or portion may be referred to as a second element, material and/or portion without departing from the teaching of some embodiments in the present disclosure. Unless defined otherwise, the first or second element, material and/or portion in the claims may be interpreted as any element, material and/or portion in the specification as long as it conforms to the description in the claims.

Unless defined otherwise, all terms (including technical and scientific terms) used herein have the same meaning as commonly understood by one of ordinary skill in the art to which the present disclosure belongs. It should be appreciated that, in each case, the term, which is defined in a commonly used dictionary, should be interpreted as having a meaning that conforms to the relative skills of the present disclosure and the background or the context of the present disclosure, and should not be interpreted in an idealized or overly formal manner unless so defined in the present disclosure. In addition, the terms "substantially," "approximately" or "about" may also be recited in the present disclosure, and these terms are intended to encompass situations or ranges that is substantially or exact the same as the description herein. It should be noted that unless defined specifically, even if the above terms are not recited in the description, it should be read as the same meaning as those approximate terms are recited.

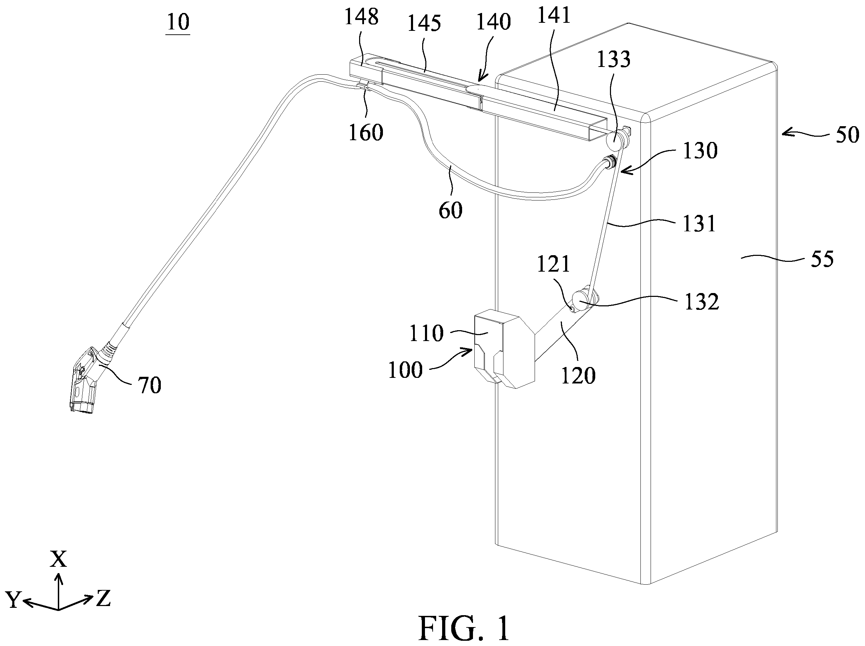

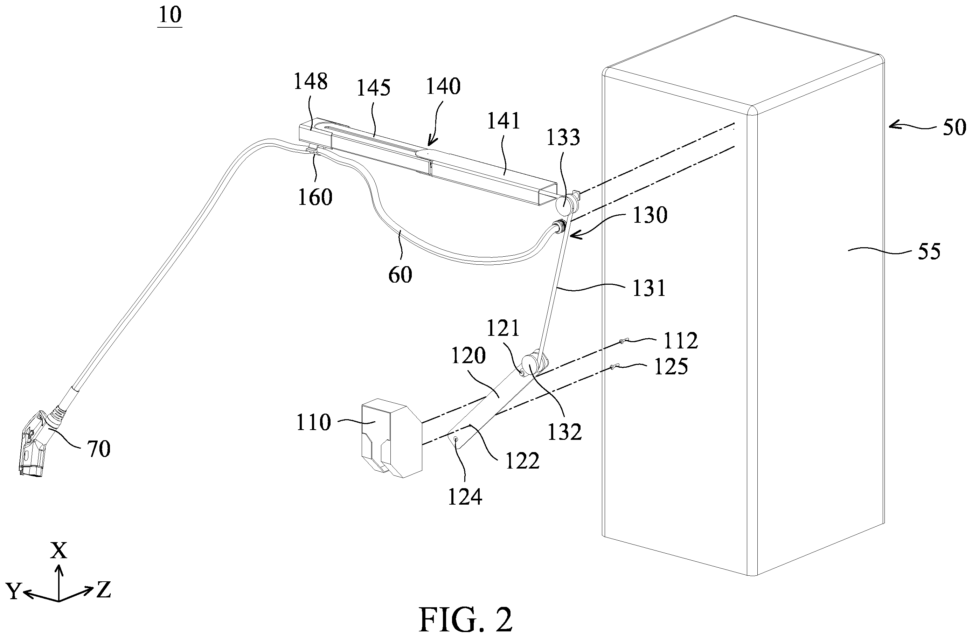

First, referring to FIG. 1 and FIG 2, FIG. 1 illustrates a perspective view of the charging system 10 in the using state in accordance with some embodiments of the present disclosure, and FIG. 2 illustrates an exploded view of the charging system 10 in accordance with some embodiments of the present disclosure. It should be noted that the charging system 10 may include an electronic device 50 and a holding mechanism 100 that is suitable for holding a part of the electronic device 50. For example, the electronic device 50 may be a charging device. In some embodiments, the electronic device 50 may include a body 55, a wire portion 60 extending from the body 55 and an end portion 70 that is connected to the wire portion 60. In some embodiments, the holding mechanism 100 can be disposed on the body 55 of the electronic device 50, and is suitable for holding the end portion 70 of the electronic device 50. As a result, the convenience of use and storage of the electronic device 50 for users can be improved. In some embodiments, the body 55 may include a power source (not shown), the wire portion 60 can be electrically connected to the power source, and the end portion 70 can be installed and connected to a charging target (such as an electric motorcycle, car, bus, etc.). In this way, the user can charge the required charging target via the electronic device 50 so that the charging target can continue to operate. However, the present disclosure is not limited thereto. The charging system 10 may include any electronic device 50 that can supply power to a charging target or electrically connect to other devices to achieve various functions.

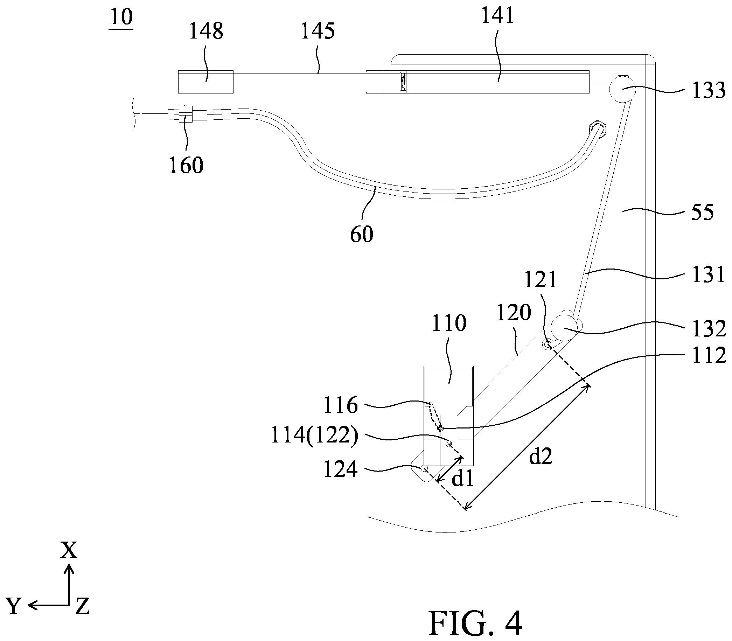

As shown in FIG. 1 and FIG. 2, the holding mechanism 100 includes a holder 110, a connecting rod 120, a connecting assembly 130, an extension assembly 140, and a clip 160. In some embodiments, the holder 110 may be suitable for accommodating the end portion 70 of the electronic device 50. In some embodiments, the holder 110 may be formed of a plastic material such as rubber to facilitate matching the shape of the end portion 70 and protect the end portion 70 of the electronic device 50 from damage caused by external forces. However, the present disclosure is not limited thereto. In some embodiments, the holder 110 may be positioned on a plane of the body 55 through a positioning member 112 that is disposed on the body 55. Specifically, the positioning member 112 may be disposed in a slide groove 116 (shown in FIG. 4) of the holder 110 and connected to the body 55 of the electronic device 50. In this way, the holder 110 is movable within a preset range, thereby reducing the risk of the holder 110 being separated from the body 55.

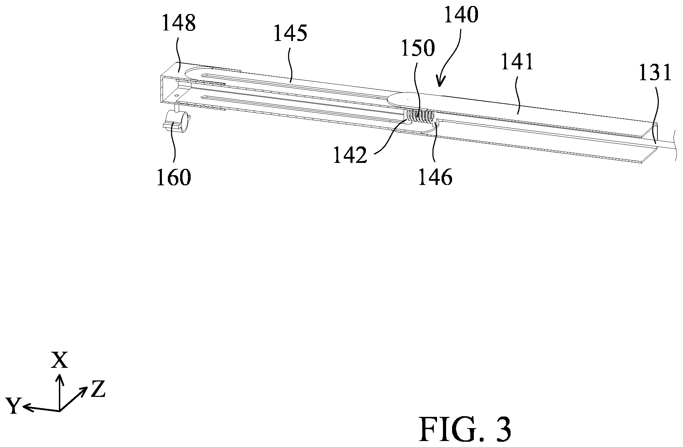

In some embodiments, the connecting rod 120 is connected to the holder 110 and is pivotally connected to the body 55 via the rotating shaft 124, so that the connecting rod 120 is rotatable relative to the body 55 around the central axis (for example, the Z axis) and drive the holder 110 to move relative to the body 55. For example, the locking member 125 is disposed in the fixing hole 114 (shown in FIG. 4) of the holder 110 and the fixing hole 122 of the connecting rod 120, so that the holder 110 is affixed to the connecting rod 120 and movable along with the rotation of the connecting rod 120. In some embodiments, the extension assembly 140 includes a fixing portion 141 and an extension portion 145 that is movable relative to the fixing portion 141. The clip 160 can be disposed on the extension assembly 140 and is suitable for engaging (or clamping) the wire portion 60 of the electronic device 50 (that is, the wire portion 60 is suitable for being clamped by the clip 160). With the configuration of the extension assembly 140 and the clip 160, the risk of the wire portion 60 of the electronic device 50 contacting the ground and being contaminated can be reduced, and it is convenient for the user to operate the electronic device 50. The detailed structure of the extension assembly 140 will be further described with reference to FIG. 3. The connecting assembly 130 is connected to the connecting rod 120 and the extension assembly 140, whereby the extension assembly 140 can be connected to the connecting rod 120 via the connecting assembly 130.

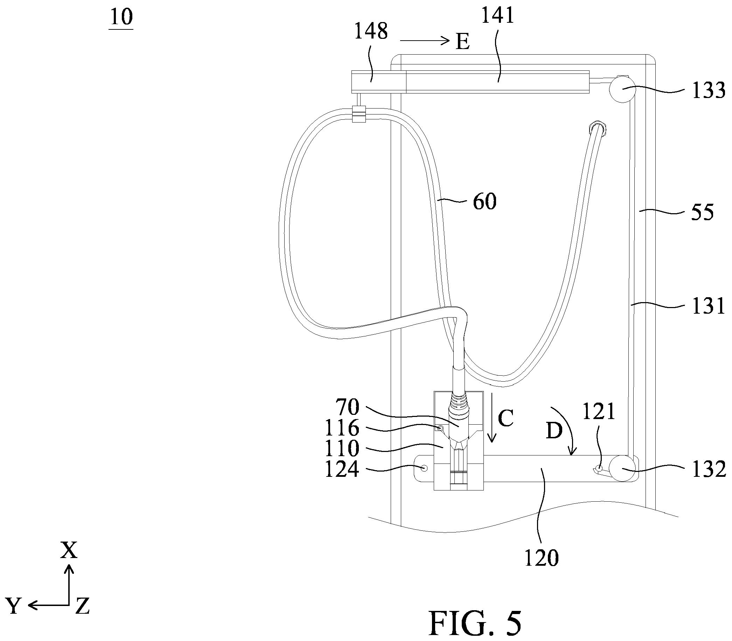

In some embodiments, the connecting assembly 130 may include a connecting cable 131, a first pulley 132, and a second pulley 133. One end of the connecting cable 131 is connected to the extension portion 145 of the extension assembly 140, and the other end is connected to the fixing pin 121 of the connecting rod 120. The first pulley 132 is disposed on the connecting rod 120, and the second pulley 133 is disposed on the body 55 and adjacent to the extension assembly 140. The connecting cable 131 can be connected to the fixing pin 121 of the connecting rod 120 via the first pulley 132 and the second pulley 133. By means of the above configuration, the extension assembly 140 can be linked with the connecting rod 120, so as to facilitate the user to operate the electronic device 50. Specifically, the holder 110 is suitable for driving the extension portion 145 of the extension assembly 140 to move relative to the fixed portion 141 by the connecting rod 120 and the connecting assembly 130. The operation method of the charging system 10 will be further described with reference to FIG. 4 and FIG. 5 below.

FIG. 3 illustrates a cross-sectional view of the extension assembly 140 in accordance with some embodiments of the present disclosure. As shown in FIG. 3, the extension assembly 140 includes a fixed portion 141, an extension portion 145, a cover 148 and an elastic element 150 that are connected to each other. The extension portion 145 can be slidably disposed within the fixed portion 141. In some embodiments, the cover 148 and the fixed portion 141 are respectively located at two ends of the extension portion 145, and the clip 160 is connected to the cover 148, thereby facilitating the user to operate the wire portion 60 and the end portion 70 of the electronic device 50. In some embodiments, the fixed portion 141 includes a guide pin 142, and the extension portion 145 includes a fixing pin 146. The guide pin 142 of the fixed portion 141 is closer to the cover 148 than the fixing pin 146 of the extension portion 145. The elastic element 150 is disposed between the guide pin 142 of the fixed portion 141 and the fixing pin 146 of the extension portion 145. For example, the elastic element 150 may be a tension spring, which continuously exerts a pulling force on the guide pin 142 of the fixed portion 141 and the fixing pin 146 of the extension portion 145 (i.e., the elastic element 150 is in a contracted state). In this way, the extension portion 145 may extend outside the fixed portion 141 to facilitate the user to operate the wire portion 60 and the end portion 70 of the electronic device 50. In some embodiments, the extension portion 145 is rotatable relative to the fixed portion 141 around the guide pin 142 to increase the convenience to the user of operating the electronic device 50.

FIG. 4 illustrates a schematic view of the charging system 10 in the using state in accordance with some embodiments of the present disclosure. As shown in FIG. 4, when the user operates the electronic device 50, the end portion 70 leaves the holder 110. At this time, the contraction force of the elastic element 150 will be greater than the sum of the weights of the holder 110 and the connecting rod 120, so that the extension portion 145 extends outside the fixing portion 141. Accordingly, the user can move the wire portion 60 and install the end portion 70 on the desired charging target for charging. In some embodiments, the distance d1 from the fixing hole 122 (i.e., the fixing hole 114) to the rotating shaft 124 is less than the distance d2 from the fixing pin 121 to the rotating shaft 124. In this way, the moment arm of the user operating the end portion 70 on the connecting rod 120 will be greater than the moment arm of the weight of the holder 110 on the connecting rod 120, thereby achieving a labor-saving effect.

FIG. 5 illustrates a schematic view of the charging system 10 in the stowed state in accordance with some embodiments of the present disclosure. As shown in FIG. 5, when the user finishes the operation and places the end portion 70 of the electronic device 50 in the holder 110, the contraction force of the elastic element 150 will be less than the sum of the weights of the holder 110, the end portion 70 and the connecting rod 120. In addition, the holder 110 moves downward along the direction C due to the weight of the end portion 70, and therefore drives the connecting rod 120 to rotate along the direction D (for example, clockwise). Due to the rotation of the connecting rod 120, the fixing pin 121 pulls the connecting cable 131, so that the extension portion 145 is pulled by the connecting cable 131 and retracted into the fixing portion 141 along the direction E (at this time, the elastic element 150 is stretched due to the force). In some embodiments, the extension portion 145 can be completely buried in the fixing portion 141. In this way, the user can restore the charging system 10 to the stowed state without any effort.

It should be understood that when the user intends to use the electronic device 50 again and pick up the end portion 70 from the holder 110, the contraction force of the elastic element 150 to will be greater than the total weight of the holder 110 and the connecting rod 120. The elastic element 150 will contract naturally, and drive the holder 110 and the connecting rod 120 to rotate, for example, in a counterclockwise direction via the connecting cable 131, and the extension portion 145 will automatically extend outside the fixing portion 141, so that the user can move the wire portion 60 and install the end portion 70 on the desired charging target for charging. As described above, the wire portion 60 of the electronic device 50 can be stretched and rotated with the configuration of the elastic element 150 and the extension assembly 140, thereby achieving the effect of labor-saving operation of the electronic device 50. In addition, the configuration of the holder 110 and the connecting rod 120 can be used to utilize the weight of the elastic element 150 and the end portion 70 of the electronic device 50 to automatically return the electronic device 50 to improve the convenience of using and storing the electronic device 50.

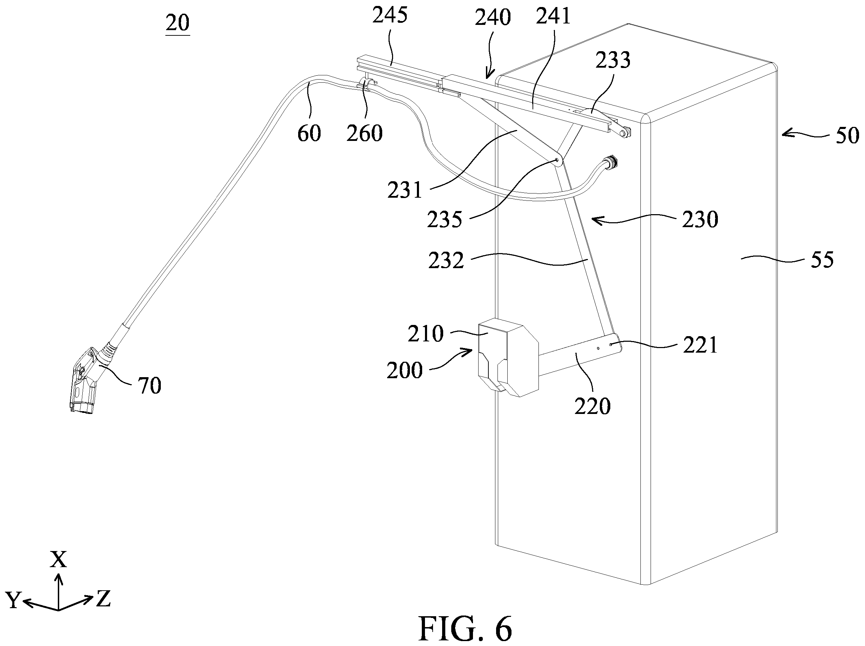

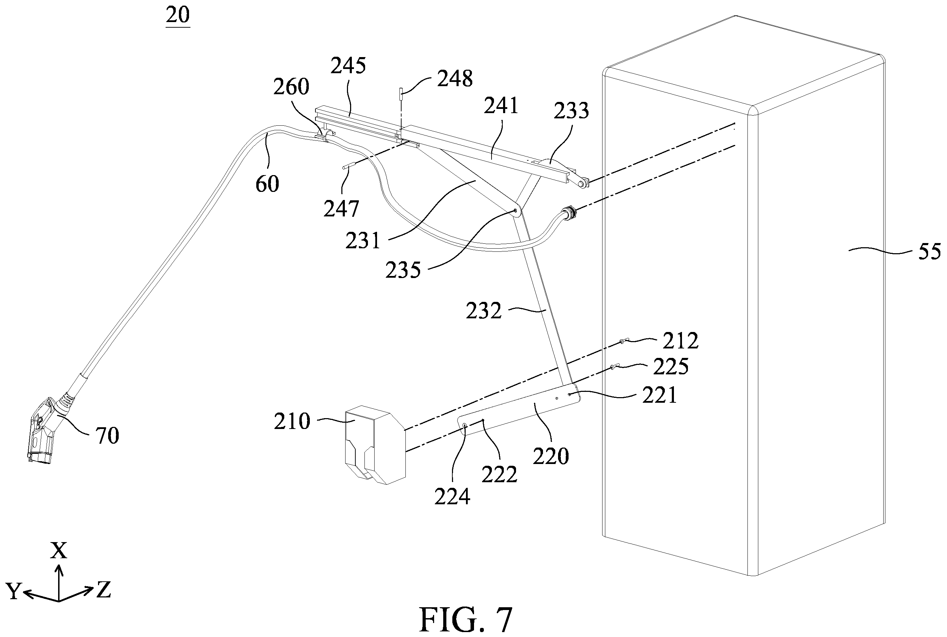

FIG. 6 illustrates a perspective view of the charging system 20 in the stowed state in accordance with some embodiments of the present disclosure. FIG. 7 illustrates an exploded view of the charging system 20 in accordance with some embodiments of the present disclosure. As shown in FIGS. 6 and 7, the charging system 20 may include an electronic device 50 and a holding mechanism 200 suitable for carrying a part of the electronic device 50. As described above, the electronic device 50 may include a body 55, a wire portion 60 extending from the body 55, and an end portion 70 that is connected to the wire portion 60. In some embodiments, the holding mechanism 200 may be disposed on the body 55 of the electronic device 50 and is suitable for holding the end portion 70 of the electronic device 50. As a result, the convenience of use and storage of the electronic device 50 for users can be improved. Similarly, the user can charge the desired charging target using the electronic device 50 (for example, operating the electronic device 50 on the body 55) so that the above-mentioned charging target can continue to operate. However, the present disclosure is not limited thereto. The charging system 20 may include any electronic device 50 that can supply power to the charging target or electrically connect to other devices to achieve various functions.

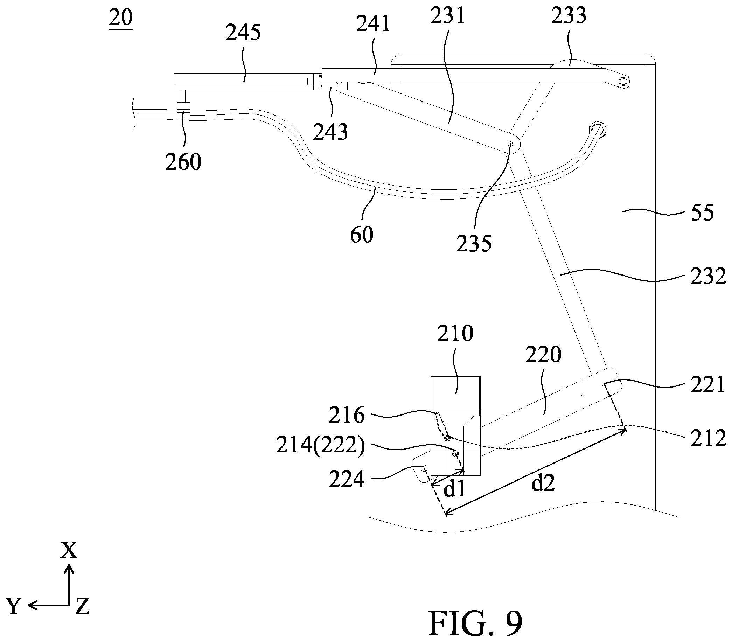

As shown in FIG. 6 and FIG. 7, the holding mechanism 200 includes a holder 210, a connecting rod 220, a connecting assembly 230, an extension assembly 240, and a clip 260. In some embodiments, the holder 210 is suitable for accommodating the end portion 70 of the electronic device 50. In some embodiments, the holder 210 can be formed of a plastic material such as rubber to facilitate matching the shape of the end portion 70 and protect the end portion 70 of the electronic device 50 from damage caused by external forces. However, the present disclosure is not limited thereto. In some embodiments, the holder 210 can be positioned on a plane of the body 55 through a positioning member 212 disposed on the body 55. Specifically, the positioning member 212 may be disposed in the slide groove 216 (shown in FIG. 9) of the holder 210 and connected to the body 55 of the electronic device 50. In this way, the holder 210 is movable within a preset range, reducing the risk of the holder 210 being separated from the body 55.

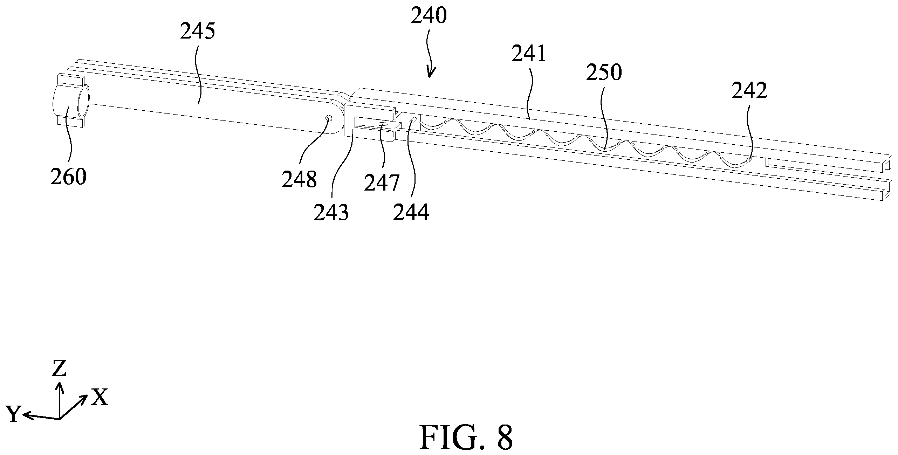

In some embodiments, the connecting rod 220 is connected to the holder 210 and is pivotally connected to the body 55 through the rotation shaft 224, so that the connecting rod 220 is rotatable relative to the body 55 around a central axis (e.g., the Z axis) and drive the holder 210 to move relative to the body 55. For example, the locking member 225 is disposed in the fixing hole 214 of the holder 210 and the fixing hole 222 of the connecting rod 220, so that the holder 210 is movable along with the rotation of the connecting rod 220. In some embodiments, the extension assembly 240 includes a fixing portion 241, an extension portion 245 that is movable relative to the fixing portion 241, and a connecting portion 243 that is connected to the fixing portion 241 and the extension portion 245. In some embodiments, the two ends of the connecting portion 243 are connected to the fixing portion 241 and the extension portion 245 via a first connecting pin 247 and a second connecting pin 248, respectively. The first connecting pin 247 and the second connecting pin 248 extend in different directions (for example, perpendicular to each other), and the extension portion 245 is rotatable relative to the connecting portion 243 around the second connecting pin 248 to increase the convenience to the user of operating the electronic device 50. The clip 260 can be disposed on the extension assembly 240 and is suitable for engaging (or clamping) the wire portion 60 of the electronic device 50 (that is, the wire portion 60 is suitable for being clamped on the clip 260). With the configuration of the extension assembly 240 and the clip 260, the risk of the wire portion 60 of the electronic device 50 contacting the ground and being contaminated can be reduced, and it is convenient for the user to operate the electronic device 50. The detailed structure of the extension assembly 240 will be further described with reference to FIG. 8 below. The connecting assembly 230 is connected to the connecting rod 220 and the extension assembly 240, whereby the extension assembly 240 can be connected to the connecting rod 220 via the connecting assembly 230.

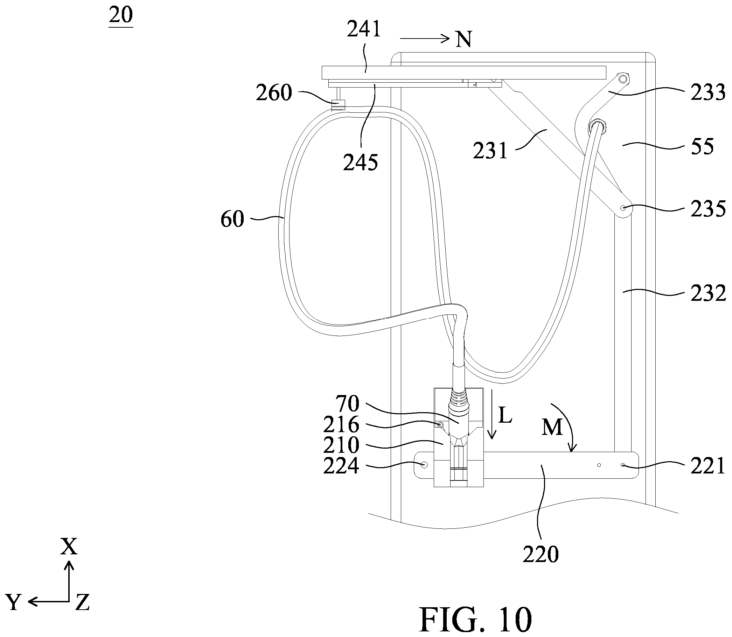

In some embodiments, the connecting assembly 230 may include a first connecting rod 231, a second connecting rod 232, and a third connecting rod 233 that are connected to each other through a central shaft 235. For example, the first connecting rod 231 is connected to the connecting portion 243 and the fixing portion 241 via the first connecting pin 247. The first connecting rod 231 may be in a shape of a straight bar, but the present disclosure is not limited thereto. The second connecting rod 232 is pivotally connected to the connecting rod 220. The second connecting rod 232 may be in a shape of a straight bar, but the present disclosure is not limited thereto. In some embodiments, the third connecting rod 233 is connected to the body 55 of the electronic device 50. The third connecting rod 233 may be in an arc shape, but the present disclosure is not limited thereto. With the above configuration, the extension assembly 240 can be linked to the connecting rod 220 to facilitate the user to operate the electronic device 50. Specifically, the holder 210 is suitable for driving the extension portion 245 of the extension assembly 240 to move relative to the fixing portion 241 via the connecting rod 220 and the connecting assembly 230. The operation of the charging system 20 will be further described below with reference to FIG. 9 and FIG. 10.

FIG. 8 illustrates a perspective view of the extension assembly 240 in accordance with some embodiments of the present disclosure. As shown in FIG. 8, the extension assembly 240 includes a fixing portion 241, a connecting portion 243, and an extension portion 245 that are connected to each other. In some embodiments, the extension portion 245 and the fixing portion 241 are respectively located at two ends of the connecting portion 243, and the clip 260 is disposed on the extension portion 245. As a result, it may help the user to operate the wire portion 60 and the end portion 70 of the electronic device 50. In some embodiments, the elastic element 250 is connected to the fixing pin 242 of the fixing portion 241 and the fixing pin 244 of the connecting portion 243. For example, the elastic element 250 can be a compression spring that continuously exerts a thrust on the fixing pin 242 of the fixing portion 241 and the fixing pin 244 of the connecting portion 243 (i.e., the elastic element 250 is in a stretched state). In this way, the elastic element 250 can push the connecting portion 243 so that the extension portion 245 extends outside the fixing portion 241. Accordingly, it may help the user to operate the wire portion 60 and the end portion 70 of the electronic device 50.

FIG. 9 illustrates a schematic view of the charging system 20 in the using state in accordance with some embodiments of the present disclosure. As shown in FIG. 9, when the user operates the electronic device 50, the end portion 70 leaves the holder 210. At this time, the stretching force of the elastic element 250 is greater than the sum of the weights of the holder 210 and the connecting rod 220, so that the extension portion 245 extends outside the fixing portion 241, so that the user can move the wire portion 60 and install the end portion 70 on the desired charging target for charging. In some embodiments, the distance d1 from the fixing hole 222 (i.e., the fixing hole 214) to the rotation shaft 224 is less than the distance d2 from the pivot shaft 221 to the rotation shaft 224. In this way, the moment arm of the user operating the end portion 70 on the connecting rod 220 will be greater than the moment arm of the weight of the holder 210 on the connecting rod 220, thereby achieving the labor-saving effect of operating the electronic device 50.

FIG. 10 illustrates a schematic view of the charging system 20 in the stowed state in accordance with some embodiments of the present disclosure. As shown in FIG. 10, when the user ends the operation and places the end portion 70 of the electronic device 50 in the holder 210, the stretching force of the elastic element 250 will be less than the sum of the weights of the holder 210, the end portion 70 and the connecting rod 220. In addition, the holder 210 moves downward along the direction L due to the weight of the end portion 70, and drives the connecting rod 120 to rotate along the direction M (e.g., clockwise). Due to the rotation of the connecting rod 220, the pivot shaft 221 drives the connecting assembly 230 (including the connected first connecting rod 231, the second connecting rod 232 and the third connecting rod 233), so that the connecting portion 243 and the extension portion 245 are pulled by the connecting assembly 230 and retracted into the fixing portion 241 along the direction N (at this time, the elastic element 250 contracts due to the force). In this way, the user can restore the charging system 20 to the stowed state without any effort.

It should be understood that when the user intends to use the electronic device 50 again and remove the end portion 70 from the holder 210, the stretching force of the elastic element 250 will be greater than the sum of the weights of the holder 210 and the connecting rod 220. The elastic element 250 will stretch naturally, and the connecting assembly 230 drives the holder 210 and the connecting rod 220 to rotate, for example, in a counterclockwise direction, and the extension portion 245 automatically extends outside the fixing portion 241, so that the user can move the wire portion 60 and install the end portion 70 on the desired charging target for charging. As described above, the wire portion 60 of the electronic device 50 can be stretched and rotated due to the configuration of the elastic element 250 and the extension assembly 240, thereby achieving the effect of labor-saving operation. In addition, the elastic element 250 and the weight of the end portion 70 of the electronic device 50 can be used to automatically return the electronic device 50 due to the configuration of the holder 210 and the connecting rod 220, thereby improving the convenience of using and storing the electronic device 50.

As set forth above, the present disclosure provides a holding mechanism including an extension assembly to engage the electronic device. In this way, the wire portion of the electronic device can be stretched and rotated due to the configuration of the elastic element and the extension assembly, thereby achieving the effect of labor-saving operation. In addition, the weight of the elastic element and the end portion of the electronic device can be used to automatically return the electronic device to its original position due to the configuration of the holder and the connecting rod, thereby improving the convenience of using and storing the electronic device.

While the embodiments and the advantages of the present disclosure have been described above, it should be understood that those skilled in the art may make various changes, substitutions, and alterations to the present disclosure without departing from the teaching and scope of the present disclosure. In addition, the scope of the present disclosure is not limited to the processes, machines, manufacture, composition, devices, methods and steps in the specific embodiments described in the specification. Those skilled in the art may understand existing or developing processes, machines, manufacture, compositions, devices, methods and steps from some embodiments of the present disclosure. As long as those may perform substantially the same function in the aforementioned embodiments and obtain substantially the same result, they may be used in accordance with some embodiments of the present disclosure. Therefore, the scope of the present disclosure includes the aforementioned processes, machines, manufacture, composition, devices, methods, and steps. Furthermore, each of the appended claims constructs an individual embodiment, and the scope of the present disclosure also includes every combination of the appended claims and embodiments.

## Claims

1. A holding mechanism (100, 200), comprising:
a holder (110, 210);
a connecting rod (120, 220) connected to the holder (110, 210);
a connecting assembly (130, 230) connected to the connecting rod (120, 220); and
an extension assembly (140, 240) connected to the connecting rod (120, 220) via the connecting assembly (130, 230) and comprising a fixed portion (141, 241) and an extension portion (145, 245),
wherein the extension assembly (140, 240) is driven to move relative to the fixed portion (141, 241) by the holder (110, 210) via the connecting rod (120, 220) and the connecting assembly (130, 230).

2. The holding mechanism (100, 200) as claimed in claim 1, further comprising an elastic element (150, 250) connecting a guide pin (142) of the fixed portion (141, 241) and a fixing pin (146) of the extension portion (145, 245).

3. The holding mechanism (100, 200) as claimed in claim 2, wherein the elastic element (150, 250) exerts a pulling force on the fixed portion (141, 241) and the extension portion (145, 245).

4. The holding mechanism (100, 200) as claimed in claim 2, wherein the extension portion (145, 245) is rotatable relative to the fixed portion (141, 241) around the guide pin (142).

5. The holding mechanism (100, 200) as claimed in claim 2, wherein the connecting assembly (130, 230) comprises a connecting cable (131) connecting the fixing pin (146) of the extension portion (145, 245) and a fixing pin (121) of the connecting rod (120, 220).

6. The holding mechanism (100, 200) as claimed in claim 5, wherein the connecting assembly (130, 230) comprises a first pulley (132) disposed on the connecting rod (120, 220), and the connecting cable (131) is connected to the fixing pin (121) of the connecting rod (120, 220) via the first pulley (132).

7. The holding mechanism (100, 200) as claimed in claim 5, wherein the connecting rod (120, 220) comprises a fixing hole (122, 222) corresponding to a fixing hole (114, 214) of the holder (110, 210), and a distance from the fixing hole (122, 222) of the connecting rod (120, 220) to a rotation axis of the connecting rod (120, 220) is less than a distance from the fixing pin (121) of the connecting rod (120, 220) to the rotation axis of the connecting rod (120, 220).

8. The holding mechanism (100, 200) as claimed in claim 1, wherein the extension assembly (140, 240) comprises a connecting portion (243), and two ends of the connecting portion (243) are connected to the fixing portion (241) and the extension portion (245) via a first connecting pin (247) and a second connecting pin (248).

9. The holding mechanism (100, 200) as claimed in claim 8, wherein the first connecting pin (247) and the second connecting pin (248) have different extension directions.

10. The holding mechanism (100, 200) as claimed in claim 8, wherein the connecting assembly (130, 230) comprises a plurality of connecting rods connected by a central shaft (235), and the connecting rods comprise a first connecting rod (231) connected to the connecting portion (243) and the fixing portion (241) via the second connecting pin (248).

11. The holding mechanism (100, 200) as claimed in claim 10, wherein the connecting rods comprise a second connecting rod (232) pivotally connected to the connecting rod (120, 220).

12. The holding mechanism (100, 200) as claimed in claim 8, further comprising an elastic element (150, 250), connecting a fixing pin (242) of the fixing portion (141, 241) and a fixing pin (244) of the connecting portion (243), wherein the elastic element (150, 250) exerts a thrust on the fixing portion (141, 241) and the connecting portion (243).

13. A charging system (10, 20), comprising:
an electronic device (50) comprising a body (55); and
a holding mechanism (100, 200), comprising:
a holder (110, 210) movably disposed on the body (55);
a connecting rod (120, 220) pivotally connected to the body (55) and connected to the holder (110, 210);
a connecting assembly (130, 230) connected to the connecting rod (120, 220); and
an extension assembly (140, 240) disposed on the body (55) and connected to the connecting rod (120, 220) via the connecting assembly (130, 230), wherein the extension assembly (140, 240) comprises a fixed portion (141, 241) and an extension portion (145, 245);
wherein the extension portion (145, 245) of the extension assembly (140, 240) is driven to move relative to the fixed portion (141, 241) by the holder (110, 210) via the connecting rod (120, 220) and the connecting assembly (130, 230).

14. The charging system (10, 20) as claimed in claim 13, wherein the holding mechanism (100, 200) further comprises an elastic element (150, 250) connecting a guide pin (142) of the fixed portion (141, 241) and a fixed pin (146) of the extension portion (145, 245), and the elastic element (150, 250) exerts a pulling force on the fixed portion (141, 241) and the extension portion (145, 245).

15. The charging system (10, 20) as claimed in claim 13, wherein the extension assembly (140, 240) comprises a connecting portion (243), two ends of the connecting portion (243) are connected to the fixed portion (241) and the extension portion (245) via a first connecting pin (247) and a second connecting pin (248) respectively, and the extension directions of the first connecting pin (247) and the second connecting pin (248) are different.

## Amended claims

### Amended claims in accordance with Rule 137(2) EPC.

1. A holding mechanism (100, 200), comprising:
a holder (110, 210), movably disposed on a body (55) of an electronic device (50), for accommodating an end portion (70) of the electronic device (50);
a connecting rod (120, 220), pivotally connected to the body (55), wherein the holder (110, 210) is fixed on the connected rod (120, 220), wherein the connecting rod is driven to rotate by the holder (110, 210);
a connecting assembly (130, 230) connected to the connecting rod (120, 220) away from the holder (110, 210), and the connecting assembly (130, 230) movable relative to the body (55), wherein the connecting assembly (130, 230) is driven to move by the holder (110, 210) through the connecting rod (120, 220); and
an extension assembly (140, 240) connected to the connecting rod (120, 220) via the connecting assembly (130, 230) and comprising a fixed portion (141, 241) and an extension portion (145, 245) connected to the fixed portion (141, 241),
wherein the extension portion (145, 245) is driven to move relative to the fixed portion (141, 241) by the holder (110, 210) via the connecting rod (120, 220) and the connecting assembly (130, 230).

2. The holding mechanism (100, 200) as claimed in claim 1, further comprising an elastic element (150, 250) connecting a guide pin (142) of the fixed portion (141, 241) and a fixing pin (146) of the extension portion (145, 245).

3. The holding mechanism (100, 200) as claimed in claim 2, wherein the elastic element (150, 250) exerts a pulling force on the fixed portion (141, 241) and the extension portion (145, 245).

4. The holding mechanism (100, 200) as claimed in claim 2, wherein the extension portion (145, 245) is rotatable relative to the fixed portion (141, 241) around the guide pin (142).

5. The holding mechanism (100, 200) as claimed in claim 2, wherein the connecting assembly (130, 230) comprises a connecting cable (131) connecting the fixing pin (146) of the extension portion (145, 245) and a fixing pin (121) of the connecting rod (120, 220).

6. The holding mechanism (100, 200) as claimed in claim 5, wherein the connecting assembly (130, 230) comprises a first pulley (132) disposed on the connecting rod (120, 220), and the connecting cable (131) is connected to the fixing pin (121) of the connecting rod (120, 220) via the first pulley (132).

7. The holding mechanism (100, 200) as claimed in claim 5, wherein the connecting rod (120, 220) comprises a fixing hole (122, 222) corresponding to a fixing hole (114, 214) of the holder (110, 210), and a distance from the fixing hole (122, 222) of the connecting rod (120, 220) to a rotation axis of the connecting rod (120, 220) is less than a distance from the fixing pin (121) of the connecting rod (120, 220) to the rotation axis of the connecting rod (120, 220).

8. The holding mechanism (100, 200) as claimed in claim 1, wherein the extension assembly (140, 240) comprises a connecting portion (243), and two ends of the connecting portion (243) are connected to the fixing portion (241) and the extension portion (245) via a first connecting pin (247) and a second connecting pin (248).

9. The holding mechanism (100, 200) as claimed in claim 8, wherein the first connecting pin (247) and the second connecting pin (248) have different extension directions.

10. The holding mechanism (100, 200) as claimed in claim 8, wherein the connecting assembly (130, 230) comprises a plurality of connecting rods connected by a central shaft (235), and the connecting rods comprise a first connecting rod (231) connected to the connecting portion (243) and the fixing portion (241) via the second connecting pin (248).

11. The holding mechanism (100, 200) as claimed in claim 10, wherein the connecting rods comprise a second connecting rod (232) pivotally connected to the connecting rod (120, 220).

12. The holding mechanism (100, 200) as claimed in claim 8, further comprising an elastic element (150, 250), connecting a fixing pin (242) of the fixing portion (141, 241) and a fixing pin (244) of the connecting portion (243), wherein the elastic element (150, 250) exerts a thrust on the fixing portion (141, 241) and the connecting portion (243).
